# EUROPÄISCHE PATENTANMELDUNG

(11) **EP 3 070 924 A1**
(43) Veröffentlichungstag der Anmeldung: **21.09.2016**
(21) Anmeldenummer: 16160579.5
(22) Anmeldetag: 16.03.2016
(51) Int. Cl.: H04N 1/60

(54) **TESTCHARTOPTIMIERUNGSVERFAHREN**

(30) Priorität: 18.03.2015 EP 15159698
(71) Anmelder: GMG GmbH & Co. KG, 72072 Tübingen (DE)
(72) Erfinder: HOFFSTADT, Hanno, DE-89077 Ulm (DE); SCHLEGEL, Christoph, DE-89073 Ulm (DE)
(74) Vertreter: Stenger Watzke Ring

(57) **Zusammenfassung**

Die Erfindung betrifft ein Verfahren zur Optimierung einer Vielzahl von Testpatches umfassenden Testcharts für Druckvorgänge, wobei in Abhängigkeit unter anderem der Vorgaben für den geplanten Druckprozess, die Farbanzahl, und etwaige Mischintentionen die möglichen Testpatches ermittelt werden, dadurch gekennzeichnet, dass die ermittelten Testpatches anhand von Vorgaben gewichtet beziehungsweise priorisiert werden, die Testpatchdaten gemäß den Gewichtungen sortiert werden und nur eine entsprechende zur Charakterisierung vorgesehene Anzahl in Abhängigkeit eines vorgegebenen Auswahlparameters zum Druck des Testcharts ausgewählt wird.

## Beschreibung

Die vorliegende Erfindung betrifft ein Verfahren zur Optimierung von einer Vielzahl von Testpatches umfassenden Testcharts für Druckvorgänge.

Testcharts sind Bestandteil eines sogenannten Charakterisierungsprozesses. Druckprozesse werden mit sogenannten Charakterisierungsdaten charakterisiert. Charakterisierungsdaten stellen die Festlegung einer eindeutigen Beziehung zwischen digitalen Tonwerten in Druckdaten dar. Sie werden zur Prozesskontrolle und zur Prozesskalibrierung, aber insbesondere auch zur Prozesssimulation herangezogen.

Der Charakterisierung liegt Folgendes zugrunde:

Charakterisierungsdaten werden zur Verwendung in einem Druckprozess gewonnen, und es wird zunächst ein Testelement mit einer Anzahl von Farbfeldern auf ein Druckmedium gedruckt. In Farbfehlern werden Tonwerte wenigstens einer Druckfarbe zugeordnet. Die Farbfehler des wenigstens einem Testelements werden mit einem Messgerät spektral vermessen. Die gewonnen Messergebnisse werden als spektrale Istdaten abgespeichert.

Von der Entwicklung der Technik her wurden im Bereich der Reproduktionstechnik für Druckseiten Druckvorlagen erzeugt. Diese enthalten alle zu druckenden Texte, Bilder, Zeichnungen, Grafiken und dergleichen. Bei mehrfarbigem Druck muss für jede Druckfarbe eine separate Druckvorlage erzeugt werden. Diese enthält alle Elemente, die in dieser spezifischen Farbe gedruckt werden soll. Beispielsweise sind dies beim Vierfarbdruck die Druckfarben zu Cyan (C), Magenta (M), Gelb (Y/yellow) und Schwarz (K). Die nach den einzelnen Druckfarben differenzierten Druckvorlagen werden auch Farbauszüge genannt. Druckvorlagen werden in der Regel gerastert und beispielsweise mit einem Belichter auf Filme belichtet, mit dem dann Druckplatten für das Drucken entsprechend hoher Auflagen hergestellt werden. Diese Druckplatten wurden dann in die einzelnen Farbwerke von entsprechend großen Druckmaschinen, den Zieldruckanlagen, eingerichtet. Die Zieldruckanlagen arbeiten nach einem entsprechenden Druckverfahren, welches als Zieldruckverfahren bezeichnet wird. Die Druckvorlagen können auch alternativ in entsprechenden Vorrichtungen durch Belichtung auch gleich auf Druckplatten aufgebracht werden. Heutzutage ist es auch gängig, dass die Druckvorlagen direkt als digitale Daten an eine digital arbeitende Druckmaschine übergeben werden. Der entsprechende Auflagendruck mit der Zieldruckmaschine unter Anlehnung des Zieldruckverfahrens erfolgte dann in den einzelnen Farbwerken durch Verwendung der Druckplatten. Es gibt inzwischen auch rein digitale Druckmaschinen, die keine Druckplatten mehr benötigen, weil sie beispielsweise nach elektrofotografischen Druckprinzipien/Druckverfahren oder beispielsweise auch mit Tintenstrahldruck arbeiten.

Inzwischen ist es gängige Praxis, Druckvorlagen elektronisch zu reproduzieren. Dabei werden Bilder digital erzeugt oder mittels Farbscannern eingescannt. Die sich ergebenden digitalen Daten werden gespeichert. Texte werden mit standardgemäßen Textverarbeitungsprogrammen erzeugt. CRD-Programme oder Zeichenprogramme dienen der Erzeugung von Grafiken und sonstigen Bildern. Alle Einheiten werden zu einer Druckseite zusammengestellt, wozu es ebenfalls Stand der Technik ist, Layout-Programme einzusetzen. Druckvorlagen werden dann unter Aufnahme der Daten einer oder mehrerer Druckseiten mit technisch erforderlichen sonstigen Elementen wie Schnittmarken, Pfalzmarken, Passkreuzen, Druckkontrollfeldern und dergleichen für einen Druckbogen zusammengefasst. Hierzu sind inzwischen standardisierte Datenformate wie beispielsweise PDF (Portable Document Format), PostScript oder dergleichen eingesetzt. Mittels Rechnern werden die Farbauszüge C, M, Y und K als sogenannte Farbauszugswerte herausgerechnet, was üblicherweise in einem Rasterimageprozessor (RIP) durchgeführt wird. Die Farbauszugswerte sind Tonwerte im Bereich von 0 bis 100 Prozent der jeweiligen Farbe für jeden einzelnen Bildpunkt.

Was früher Sonderfälle waren, ist heute zu einem Standard, beispielsweise im Bereich des Verpackungsdruckes, geworden. Man verwendet zusätzliche Sonderfarben. Es wird also mit mehr als vier Farben gedruckt. Also muss jeder einzelne Bildpunkt durch so viele Farbauszugswerte beschrieben werden, wie es Druckfarben gibt.

Der beschriebene Prozess führt jedoch nicht dazu, dass die Farben der Elemente einer Druckseite gleich in einem vorgegebenen Farbsystem wie dem CMYK-Farbsystem vorhanden sind, sondern in einem anderen, in der Regel durch Messgeräte definierten Farbsystem. Ein Scanner zerlegt die Bilder in Farbkomponenten Rot, Grün und Blau (RGB), sodass sich ein dreidimensionaler Farbraum ergibt. Die Bilddaten müssen dann von der Produktion von Druckvorlagen von diesem dreidimensionalen LED-Farbraum des Scanners in den vierdimensionalen CMYK-Farbraum des Zieldruckverfahrens umgerechnet werden. Das Gleiche gilt grundsätzlich für alle zu druckenden Medien einschließlich digital fotografierter Bilder und dergleichen.

Derartige Farbraumtransformationen sind inzwischen ein Standard und sind erforderlich, weil jedes Gerät, jedes Druckverfahren, jedes Messgerät, jeder Scanner, jeder Monitor, jeder Proofdrucker, jede Druckmaschine und dergleichen Besonderheiten aufweisen und/oder Einschränkungen. Daraus ergeben sich völlig unterschiedliche Darstellungen und Wiedergaben der Farben mit dem Ergebnis, dass Druckerzeugnisse in jedem Prozess und auf jeder Maschine anders dargestellt werden. Für jedes Gerät gibt es also Farbräume, die zueinander unterschiedlich sind und jeweils für sich die Farbeigenschaften des jeweiligen Gerätes, Verfahrens oder Prozesses optimal beschreiben. Man bezeichnet diese als geräteabhängige Farbräume. Daneben gibt es noch für Geräte, Verfahren und dergleichen unabhängige Farbräume, deren Basis die menschlichen Seheigenschaften darstellen. Hier wird ein sogenannter Normalbetrachter oder Normalbeobachter zugrundgelegt. Derartige Farbräume sind standardisiert, und zwar von der Standardisierungskommission CIE (Commission Internationale d'Eclairage) definierte CIE 1931 XYZ-Farbraum (kurz XYZ-Farbraum) oder der daraus abgeleitete CIE 1976 L*a*b* Farbraum (kurz Lab-Farbraum), wobei sich der Lab-Farbraum in der Technik stärker durchgesetzt hat. Will man wissen, ob zwei Farben vom menschlichen Auge als gleich oder verschieden empfunden werden, so verwendet man dazu die Messung der XYZ- bzw. Lab-Farbkomponenten. Die Lab-Farbkomponenten bilden dabei einen dreidimensionalen Farbraum mit einer Helligkeitsachse (L) und zwei Farbachsen (a,b), die man sich in der Ebene eines Farbkreises vorstellt, durch dessen Mittelpunkt die Helligkeitsachse verläuft. Die Lab-Farbkomponenten stehen mit den XYZ-Farbkomponenten über nichtlineare Umrechnungsgleichungen in Beziehung.

Ordnet man nun die Werte eines geräteabhängigen Farbraums eines Gerätes oder Verfahrens beziehungsweise Prozesses (den Tonwerten) die jeweiligen Lab-Farbwerte zu, die ein Mensch bei der entsprechenden Tonwertkombination sieht, so hat man das Gerät beziehungsweise das Verfahren bezüglich seiner Farbeigenschaften charakterisiert.

Die verschiedenen CMYK-Tonwertkombinationen erzeugen jeweils eine andere Farbe. Diese kann mit einem Farbmessgerät gemessen und in die Lab-Komponenten zerlegt werden. Man hat also für jede CMYK-Druckkombination einen Lab-Farbwert. Man hat somit eine Beziehung zwischen einem geräteabhängigen und einem geräteunabhängigen Farbraum. Eine solche Beziehung wird als Farbprofil bezeichnet. Für einen Druckprozess gibt es somit ein Ausgabefarbprofil, Die Definition und Datenformate für Farbprofile sind vom ICC (International Color Consortium) standardisiert (Specification ICC.1. 2006-05) und von der ISO normiert worden (ISO IS015076-1:2005). In einem ICC-Farbprofil ist die Zuordnung der Farbräume in beiden Richtungen gespeichert, zum Beispiel die Zuordnung Lab = fl (CMYK) und die invertierte Zuordnung CMYK = f2 (Lab). Die mit einem Farbprofil festgelegte Zuordnung kann mit Hilfe eines Tabellenspeichers realisiert werden.

Wenn zum Beispiel den CMYK-Tonwerten eines Druckprozesses die Lab-Farbwerte zugeordnet werden sollen, muss der Tabellenspeicher für jede mögliche Wertekombination der CMYK-Tonwerte einen Speicherplatz haben, in dem die zugeordneten Lab-Farbwerte gespeichert sind.

Es ist ganz offensichtlich, dass derartige Datenbanken, in dem Tabellenspeicher abgelegt sind, sehr groß werden können. Geht man davon aus, dass ein CMYK-Tonwert 256 Tonwertstufen hat (man geht von 8 Bit pro Bildpunkt und Farbe aus und einem Wertebereich von 0 bis 100 Prozent, der in 256 Tonwertstufen unterteilt ist), so ergeben sich 4.294.967.296 mögliche Wertkombinationen der CMYK-Werte. Mithilfe von Interpretationsverfahren und der Einrichtung von sogenannten Stützstellen versucht man, dies werteführend einzudämmen. Es wird ein etwas gröberes Gitter im sogenannten CMYK-Farbraum erzeugt und die entsprechenden Stützstellenwerte gespeichert. Für dazwischenliegende CMYK-Tonwerte werden die zuzuordnenden Lab-Werte interpoliert. Es ist ganz offensichtlich, dass bei Verwendung von mehr Farben gewaltige Datenmengen entstehen.

Die Ermittlung von Charakterisierungsdaten für CMYK-Systeme sind beispielsweise in der ISO 12642-2 (:2006) identifiziert.

Für geplante Druckvorhaben, das heißt, die Absicht, einen gegebenen konkreten Druckbogen zu erzeugen, werden darüber hinaus noch weitere konkrete Vorgaben gemacht. Diese beziehen sich auf die Angabe der geplanten Farbanzahl, die - aus welchen Gründen auch immer - eingesetzt werden soll. Dabei wird davon ausgegangen, dass die Einzeifarbe hinsichtlich ihrer Charakteristik identifiziert ist. Weiterhin werden häufig Mischintentionen vorgegeben, das heißt, es wird angegeben, welche Farbe vorrangig oder dominant zum Einsatz kommen soll. Es werden Sonderfarben identifiziert, es wird eine Flächendeckungssumme (TAC) angegeben, maximales Schwarz, Schwarzaufbau, es werden auch sogenannte Solids angegeben, also Farben, die nur 100 Prozent gedruckt werden.

Diese zusätzlichen prozessbedingten oder produktbedingten Randbedingungen werden bei dem Vorgang der Charakterisierung eingesetzt beziehungsweise berücksichtigt.

Um den genannten Prozess durchführen zu können, das heißt, die sogenannte Charakterisierung für ein Druckvorhaben durchführen zu können, werden bekanntermaßen Testcharts erzeugt.

Bei den Testcharts handelt es sich um eine Ansammlung von Feldern einer im Wesentlichen vorgegebenen Geometrie, die mit unterschiedlichen Farben bedruckt sind. Grundsätzlich basieren Druckvorgänge darauf, dass pro Druckpunkt jede der für den Druck zur Verfügung stehenden Farben in einem prozentualen Anteil von 0-100 % gedruckt wird. Das Endergebnis ist dann eine bestimmte Farberscheinung an dem jeweiligen Druckpunkt. Um nun die Qualität des jeweiligen konkreten Druckergebnisses prüfen zu können, insbesondere messtechnisch nachvollziehen zu können, ist es üblich, die das Testchart ausmachenden Felder, die sogenannten Testpatches, nach bestimmten Regeln zu drucken.

Um eine allgemeine Charakterisierung zu erstellen, bekommt man eine nahezu perfekte Qualität wenn man für genügend Stutzstellen pro jede Farbe (z.B. 0-5-10-20-30-40-50-60-70-80-90-95-100) jede Farbkombination auf den Testchart platziert. Für 4 Farben würde das einen Testchart mit zirka 28000 Patches bzw. 1 m2 Fläche generieren. Obwohl das physikalisch noch möglich ist, wird das aus Kostengründen nicht verwendet. Mit der sinnvollen Reduktion von Stutzstellen kann man noch immer ausreichende Qualität bekommen. Für die Konfiguration von 0-10-25-40-55-70-85-100, und entsprechende weitere Reduktion mit dem Anstieg von Schwarz, ergibt sich für 4 Farben eine Testchart-Größe von zirka 1500 Patches bzw. ungefähr eine DIN-A4 Fläche. Das wird häufig in der Industrie tatsächlich verwendet. Die Probleme fangen dann an, wenn man mehr als 4 Farben in der Produktion hat. Die Variationsmöglichkeiten für die zusätzlichen sogenannten Sonderfarben, verursachen häufig die Notwendigkeit der Re-Charakterisierung. Da ist selbst die erwähnte DIN-A4 Fläche manchmal ein relevanter Kostenfaktor. Dazu kommt noch das Multiplizieren der Patch-Anzahl durch Sonderfarben, wo man schon bei der 5. Farbe ein Mehrfaches von einer DIN-A4 Seite hat. Die Produktionen im Verpackungsbereich haben häufig zwischen 6 und 8 Farben. Es ist offensichtlich, dass man mit der beschriebenen Strategie, solche Druckproduktionen sehr schwierig und mit sehr hohen Kosten charakterisieren kann.

Die Herstellung von Testcharts bedeutet einen hohen wirtschaftlichen Aufwand. Darüber hinaus jedoch muss auf den unterschiedlichen Druckerzeugnissen der jeweilige Platz für das beabsichtigte Testchart vorgesehen werden. Dann ist offensichtlich, dass mit der Herstellung eines Testcharts ein erheblicher Farbverbrauch verbunden ist. Je nach Druckverfahren und je nach Größe des Testcharts kann es vorkommen, dass ganze Druckbögen ausschließlich zur Herstellung von Testcharts eingesetzt werden, was den wirtschaftlichen Aufwand weiterhin erheblich erhöht. Ganze Druckanlagen werden zumindest zeitweise zur reinen Testcharts Erstellung verwendet. Druckerzeugnisse müssen unter Umständen an das Bedürfnis zur Testchart Herstellung angepasst werden.

Durch Stichprobenkontrollen kann nun durch Vermessung der einzelnen Testpatches geprüft werden, ob die Qualität des Druckerzeugnisses den Anforderungen entspricht.

Es ist bekannt, dass bei den unterschiedlichen Druckverfahren unterschiedliche Qualitätsprobleme gegeben sein können. Im sogenannten Flexo-Druck ist es üblicherweise der sogenannte Lichterbereich, also der Bereich heller Farben, der problematisch sein kann.

Insbesondere bei der Verwendung vieler Farben ist ganz offensichtlich, dass eine ungeheure Zahl von Testpatches gedruckt werden müsste, um eine konsequente Charakterisierung durchführen zu können. Dafür haben die Druckerzeugnisse jedoch üblicherweise nicht den notwendigen Platz auf dem Druckbogen.

Aus dem Stand der Technik sind Verfahren bekannt, bei welchen versucht wird, die Anzahl der Testpatches zu verringern, um die Testcharts insgesamt zu verkleinern und den notwendigen Aufwand zu reduzieren.

Beispielsweise wird in der US 2005/0093879 vorgeschlagen, dass ein Benutzer seinerseits eine Art Auswahl trifft. Andere zum Stand der Technik gehörende Druckschriften, beispielsweise die US 2006/0152776, die US 6,441,923 oder WO 2004/070331 A1 betreffen grundsätzlich nicht die Charakterisierung, sondern die Qualitätskontrolle, das Kalibrieren oder eine Reproduktionsverbesserung. Auch diese schlagen vor, eine Nutzerauswahl durchzuführen. In Einzelfällen wird vorgeschlagen, die gesamte Farbkombinationsauswahl zu reduzieren. Hierzu wird in den Tabellen überprüft, wenn Farben einer Farbkombination in einem Bildpunkt unterhalb eines bestimmten Anteils rutschen. In diesem Fall wird der Bildpunkt auf andere Weise reproduziert, wobei die Farbe schlichtweg ganz weggelassen wird, um auf diese Weise gleichwohl einen sehr nahe kommenden Druckwert zu erzeugen, der am Ende einem sehr ähnlichen Lab-Wert entspricht.

Ausgehend vom vorbeschriebenen Stand der Technik liegt der vorliegenden Erfindung die Aufgabe zugrunde, den Aufwand zur Herstellung von der Charakterisierung dienenden Testcharts zu reduzieren und die Anordnung der Testcharts auf einem Druckbogen zu optimieren insbesondere bei einer gegebenen Fläche zum Druck eines Testcharts eine optimale Testchartqualität zu gewährleisten.

Zur technischen Lösung dieser Aufgabe schlägt die Erfindung ein Verfahren mit den Merkmalen des Patentanspruches 1 vor. Weitere Vorteile und Merkmale der Erfindung ergeben sich aus den Unteransprüchen.

Wie bereits im Stand der Technik ausgeführt, wird zunächst für ein Druckvorhaben festgelegt, mit welchem Prozess, auf welcher Maschine, also in welchem Zieldruckverfahren das Druckerzeugnis hergestellt werden soll. Festgelegt sind ebenfalls die Anzahl der zu verwendenden Druckfarben sowie die Art ihrer Verwendung, also die sogenannte Farbintention. Dabei wird festgelegt, welche Farbe eine Separationsfarbe ist, welche Farbe Solid ist, welche Farbe als Kontrastfarbe oder als Sonderfarbe eingesetzt wird. Weiterhin werden Regeln für eine Gewichtung beziehungsweise eine Priorisierung festgelegt. Hierbei handelt es sich um Regeln zur Vergabe von Gewichtungswerten innerhalb eines Spektrums. Wird beispielsweise ein Bereich zwischen 0,0 und 1,0 als Gewichtungsspektrum festgelegt, so werden für bestimmte Eigenschaften Gewichtungseckwerte oder Gewichtungswerte vorgegeben. Hier können eine Vielzahl von Parametern berücksichtigt werden, beispielsweise Stützstellenwerte können mit einem Gewichtungswert versehen werden, Extremwerte (also 0 Prozent Farbe/100 Prozent Farbe), sowie die Farbintentionsinformationen. Es können verschiedene Aspekte berücksichtigt werden, wie die Anzahl von Farben in einem Patch und so weiter.

Grundsätzlich werden dabei bestimmte Bereich beziehungsweise Patches zunächst einmal entweder mit der niedrigsten Gewichtung versehen oder ohne Gewichtung direkt verworfen. Dieses sind beispielsweise eindeutige Drucksituationen wie Extremwerte und dergleichen.

Für das Druckvorhaben werden nun zunächst die Testpatchwerte ermittelt. Wie eingangs erläutert ist ein Testpatch praktisch ein geometrisch begrenztes Gebiet, meist ein Quadrat von gegebener Größe, welches einheitlich mit einer einzigen Kombination von Farben gefüllt ist, welche in einer vorgegebenen Reihenfolge mit bestimmten prozentualen Anteilen in dieses Feld gedruckt werden. Das Ergebnis ist eine eineindeutige Farbmischung, also eines sich ergebenen Farbwertes, welcher durch die Charakterisierung einem eineindeutigen Lab-Wert zuzuordnen sein wird. Wie bereits ausgeführt, werden bestimmte Testpatches direkt verworfen beziehungsweise werden die Testpatche mit einer entsprechenden Gewichtung beziehungsweise Priorisierung versehen. Daraufhin werden die Patches entsprechend der Gewichtung oder Priorisierung sortiert. Es wird dann anhand eines vorgegebenen Parameters entschieden, welche Testpatche, immer angefangen von dem mit der höchsten Gewichtung oder Priorisierung, für den Druck des Testcharts zusammengestellt werden.

Ein solcher Parameter ist erfindungsgemäß die zum Druck eines Testcharts zur Verfügung stehende Fläche. Bei einem Druckvorhaben können bestimmte Flächen zum Druck eines Testchart verwendet werden. Üblicherweise handelt es sich um einen rechteckigen Bereich, der dann entsprechend der Testpatchgröße aufgeteilt wird, sodass sich automatisch die druckbare Anzahl von Testpatches ergibt. Gemäß einem vorteilhaften Vorschlag der Erfindung können jedoch mehrere Bereiche auf einem Druckbogen vorgesehen werden. Die Testpatches können dann über diese Bereiche beziehungsweise Flächen verteilt werden.

Eine alternative Möglichkeit besteht darin, eine Art Grenzwert festzulegen, bis zu welchem die Testpatches ausgedruckt werden.

Es wird dann eine Entscheidung getroffen, ab welcher Stelle von Gewichtungswerten, die Testpatches nicht mehr ausgedruckt werden.

Sowohl die Gewichtung als auch die Druckentscheidung können automatisiert vorgenommen werden, wenn die Vorgaben entsprechend eingerichtet sind.

Randbedingungen für die Grenzwertentscheidung, ab welchen Patches gedruckt oder eben nicht mehr gedruckt werden, können unterschiedlicher Art sein. Beispielsweise kann eine Platzvorgabe auf dem Druckbogen zur Anordnung eines Testcharts entscheidend sein, das heißt, es kann eben nur eine bestimmte Anzahl von Testpatches einer bestimmten Größe gedruckt werden. Eine andere Rahmenbedingung kann sein, dass bestimmte Patches für eine Charakterisierung aus Erfahrungsgründen nicht benötigt werden. Dies gilt beispielsweise für einzelne Stützstellen, Extrembereiche, Einsatz der Farbe zu bestimmten Intentionen und dergleichen. Diese Erfahrungswerte können bei der Vorgabe zur Ermittlung des Grenzwertes berücksichtigt werden.

Ein weiterer besonderer Aspekt der vorliegenden Erfindung liegt in der Festlegung der zum Druck der Testcharts vorgegebenen Fläche. Erfindungsgemäß ist vorgesehen, auf einem zum Druck vorgesehenen Druckbogen Bereiche zu identifizieren, die sich grundsätzlich zur Aufnahme einer Anzahl von Testpatches eignen. So können auf einem Druckbogen mehrere rechteckige Bereiche identifiziert und festgelegt werden, in welche Testpatches eindruckbar sind. Diese Bereiche können dann flexibel genutzt werden, um die zum Druck für die Charakterisierung vorgesehenen Testpatches verteilen zu können.

Auf diese Weise findet die Erfindung neben der reinen Patch-Priorisierung, das heißt der Reduzierung der Anzahl zum Druck von Patches auch eine Optimierung durch Flächenvariationen und Flächenaufteilung des Testcharts statt.

Gemäß der Erfindung werden eine Reihe von Vorgaben und Eingangsparametern dazu verwendet, eine Priorisierung der Testpatches vorzunehmen. Vorgaben und Eingangsparameter sind die Identifikation des Zieldruckverfahrens, die geplante Farbanzahl, die Farbidentifikation und die geplanten Mischintentionen. Priorisierung der Testpatches bedeutet, dass unter Berücksichtigung der Vorgaben die einzelnen Testpatches nach ihrer Wichtigkeit geordnet werden. Gemäß dieser Priorisierung wird dann eine Zusammenstellung von Testpatches erstellt, die als Testchart druckbar ist. Auf diese Weise ist es möglich, ohnehin bekannte oder unwichtige Testpatches gar nicht zu drucken, ganz zu vermeiden oder nur dann, wenn ausreichend Zeit, Platz und/oder wirtschaftliche Mittel gegeben sind.

Gemäß einem vorteilhaften Vorschlag der Erfindung wird für die Testpatch Zusammenstellung eine Vorgabe des für ein Testcharts vorgegebenen Platzes berücksichtigt. Das bedeutet, dass je nach Druckvorhaben ein Bereich auf den Produkt Zeugnissen vorgesehen werden kann, der einteilig oder auch mehrteilig sein kann, so das im Vorfeld festgelegt ist, in welche Bereiche Testcharts druckbar sind. Je nachdem, wie viel Platz sich daraus ergibt, kann anhand der Priorisierung dann die Reihenfolge der Testpatches abgearbeitet und auf diese Weise ein Testcharts erstellt werden, welches die für den vorliegenden Druckauftrag wichtigsten Patches umfasst.

Gemäß einem weiteren vorteilhaften Vorschlag der Erfindung wird eine Testpatch-Geometrie vorgegeben bzw. ermittelt. Als Grundlage hierfür findet das für die Vermessung vorgesehene Messgerät Berücksichtigung, da dieses in der Regel eine Mindestgröße für Testpatches vorgibt. In Kombination mit den vorgeschriebenen Platzvorgaben ergibt sich somit eine weitere Optimierung der Testcharts.

Gemäß einem weiteren Vorschlag der Erfindung wird bei der Priorisierung der Testpatches der Farbeinsatzzweck berücksichtigt. Das bedeutet, es wird hinterfragt, ob die jeweilige Farbe als Einzelfarbe, als Sonderfarbe, als Kontrastgeber, zum Zwecke der Bildseparation oder nach sonstigen Besonderheiten eingesetzt wird. Hieraus lassen sich für die Priorisierung weitere Merkmale herleiten, so dass die Testpatch-Zusammenstellung noch optimierter ist.

Mit der Erfindung wird ein einfach umsetzbares Verfahren zur Optimierung von Testcharts vorgeschlagen, welches den wirtschaftlichen Aufwand von Druckvorgängen erheblich reduzieren kann. Darüber hinaus ist das Testchart auch hinsichtlich der Sortierung der Test Patches optimiert, was Charakterisierungsvorgänge ebenfalls vereinfacht und verbessert. Weitere Vorteile und Merkmale der Erfindung ergeben sich aus der folgenden Beschreibung anhand der Figuren. Dabei zeigen:
- Figur 1: eine beispielhafte Darstellung einer Datensammlungsmaske zur Zusammenstellung der Vorgaben
- Figur 2: ein unter Berücksichtigung der Vorgaben gemäß Figur 1 optimiertes Testchart
- Figur 3: eine alternative beispielhafte Darstellung einer Datensammlungsmaske zur Zusammenstellung der Vorgaben

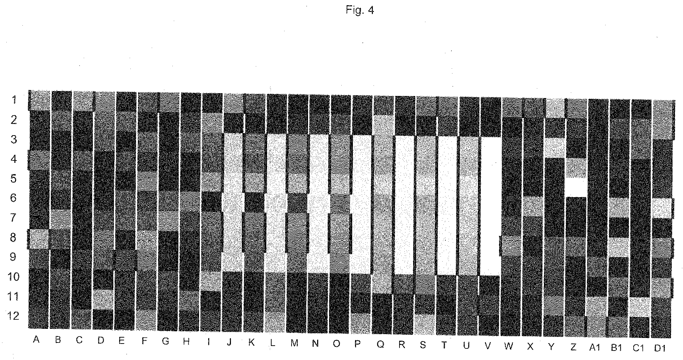

- Figur 4: ein unter Berücksichtigung der Vorgaben gemäß Figur 3 erstes optimiertes Testchart

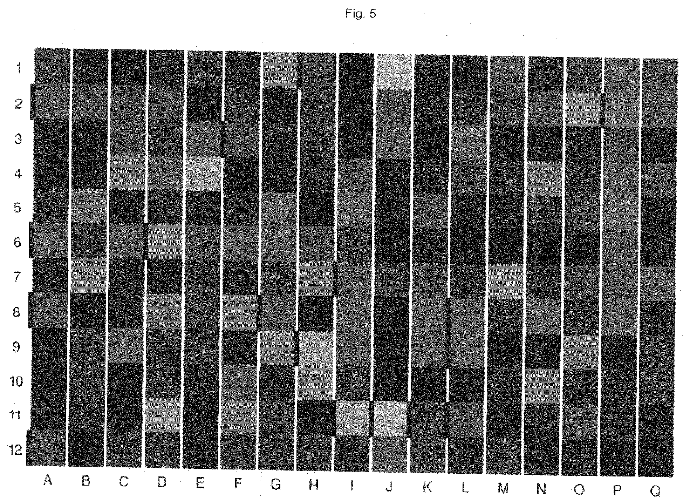

- Figur 5: ein unter Berücksichtigung der Vorgaben gemäß Figur 3 zweites optimiertes Testchart.

Die Figuren sind rein beispielhaft und unter Berücksichtigung der Vorschriften schwarzweiß beziehungsweise in Grautönen, stellen im Übrigen aber die selbstverständlich vielfarbigen Darstellungen von Testpatches dar. Aus diesem Grunde werden zugleich auch die farbigen Darstellungen der Beschreibung zugrundegelegt.

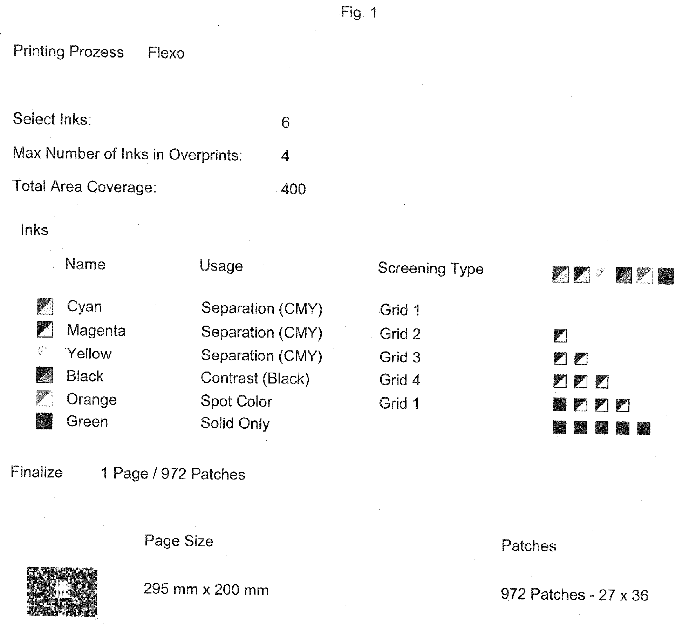

Gemäß Figur 1 sind Daten zur Zusammenstellung der Vorgaben für einen geplanten Druck zusammengestellt. Zunächst wurde unter dem Aspekt printing prozess festgelegt, dass ein sogenannter Flexo-Druck erfolgen soll. Dann wurde festgelegt, dass sechs Farben verwendet werden sollen, alle im Überdruck. Zwei Farben (Cyan und Orange) nutzten gleiche Raster-Konfiguration und können somit nicht übereinander gedruckt werden, eine Farbe (Green) kommt nur als Solid vor. Weiterhin wurde für jede der Farben festgelegt, welchem Zweck diese dienen. So wurden Farben als Kontrastfarben identifiziert, als Separation-Farben, als Einzelfarbe und dergleichen. Schlussendlich wurde ein Feld von 295 × 200 mm als Feld für ein Testchart festgelegt.

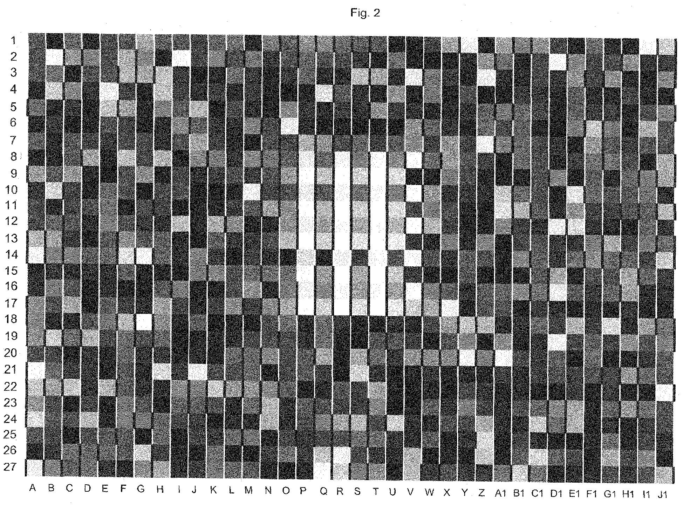

Aufgrund der Platzvorgabe wurde errechnet, dass 972 Patches druckbar sind, die in 27 Zeilen mit jeweils 36 Spalten platziert werden. Entsprechend wurde das Testchart gemäß Figur 2 gedruckt. Man sieht bereits, dass gegenüber herkömmlichen sechs-Farbprozessen eine erheblich reduzierte Anzahl von Patches erzeugt wurde. Diese enthält die für das Druckverfahren kritischen Farbkombination und Einzelfarbbereiche, um auf diese Weise optimale Messergebnisse bei verringertem Aufwand erzielen zu können.

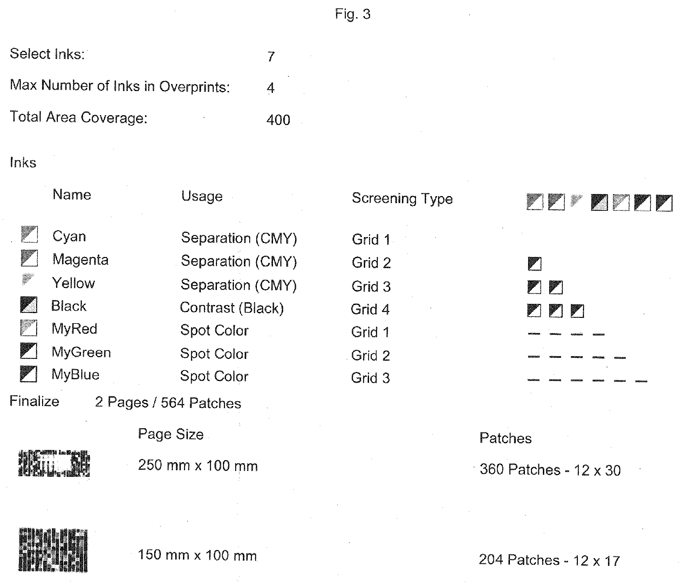

Gemäß Figur 3 wurde festgelegt, dass sieben Farben eingesetzt werden, dabei vier im Überdruck. Auch hier wurden die entsprechenden Eigenschaften festgelegt. Als Platz wurden zwei Bereiche angegeben mit unterschiedlichen Maßen. Insofern wurde anhand der Priorisierung eine Aufteilung vorgenommen. Es ergeben sich dann die in den Figuren vier und fünf gezeigten zwei Patch-Felder, die zusammen das für den vorliegenden Vorgang optimale Testchart ergeben.

Die beschriebenen Ausführungsbeispiele dienen nur der Erläuterung und sind nicht beschränkend. Insbesondere lassen sich auch weitere Merkmale im Rahmen der Erfindung einsetzen.

## Patentansprüche

1. Verfahren zur Optimierung einer Vielzahl von Testpatches umfassenden Testcharts für Druckvorgänge, wobei in Abhängigkeit unter anderem der Vorgaben für den geplanten Druckprozess, die Farbanzahl, und etwaige Mischintentionen die möglichen Testpatches ermittelt werden, **dadurch gekennzeichnet, dass** die ermittelten Testpatches anhand von Vorgaben gewichtet beziehungsweise priorisiert werden, die Testpatchdaten gemäß den Gewichtungen sortiert werden und nur eine entsprechende zur Charakterisierung vorgesehene Anzahl in Abhängigkeit eines vorgegebenen Auswahlparameters zum Druck des Testcharts ausgewählt wird.

2. Verfahren nach Anspruch 1, **dadurch gekennzeichnet, dass** als vorgegebener Auswahlparameter eine für den Druck verfügbare Flächengröße verwendet wird.

3. Verfahren nach Anspruch 1, **dadurch gekennzeichnet, dass** als vorgegebener Auswahlparameter Testpatches oberhalb eines Gewichtungskennwertes ausgewählt werden.

4. Verfahren nacheinem der vorhergehenden Ansprüche, **dadurch gekennzeichnet, dass** die Gewichtung in der Vergabe einer Kennzahl erfolgt.

5. Verfahren nach Anspruch 4, **dadurch gekennzeichnet, dass** eine Kennzahl zwischen 0,0 (unwichtig) und 1,0 (sehr wichtig) verwendet wird.

6. Verfahren nach einem der vorhergehenden Ansprüche, **dadurch gekennzeichnet, dass** eine Gewichtung eine Stützstellenvorgabe berücksichtigt.

7. Verfahren nach einem der vorhergehenden Ansprüche, **dadurch gekennzeichnet, dass** für die Gewichtung die Farbintention berücksichtigt wird.

8. Verfahren nach einem der vorhergehenden Ansprüche, **dadurch gekennzeichnet, dass** für die Gewichtung die Farbanzahl berücksichtigt wird.

9. Verfahren nach einem der vorhergehenden Ansprüche, **dadurch gekennzeichnet, dass** auf einem Druckbogen des geplanten Druckvorhabens mehrere Flächen zur Anordnung von Testpatches festgelegt werden.

10. Verfahren nach Anspruch 9, **dadurch gekennzeichnet, dass** die Anzahl der zu druckenden Testpatches in Abhängigkeit von der für den Druck der Testcharts zur Verfügung gestellten Flächen festgelegt wird.

11. Verfahren nach Anspruch 9 oder 10, **dadurch gekennzeichnet, dass** die zu druckenden Testpatches auf die verschiedenen vorgegebenen Flächen verteilt werden.
